# EUROPÄISCHE PATENTSCHRIFT

(11) **EP 0 950 834 B1**
(45) Veröffentlichungstag und Bekanntmachung des Hinweises auf die Patenterteilung: **28.08.2002**
(21) Anmeldenummer: 99250110.6
(22) Anmeldetag: 09.04.1999
(51) Int. Cl.: F16H 57/02

(54) **Antriebseinheit in Baukastenform**
Modular drive unit
Unité motrice modulaire

(30) Priorität: 17.04.1998 DE 19817936
(43) Veröffentlichungstag der Anmeldung: 20.10.1999
(73) Patentinhaber: Demag Cranes & Components GmbH, 58300 Wetter (DE)
(72) Erfinder: Vilain, Thomas, Dipl.-Ing., 46342 Velen (DE)
(74) Vertreter: Meissner, Peter E., Dipl.-Ing.

(56) Entgegenhaltungen:
- DE-A- 2 019 434
- DE-A- 2 649 949
- US-A- 4 811 616

## Beschreibung

Die Erfindung betrifft eine Antriebseinheit gemäß dem Obergriff des Anspruchs 1.

Es ist allgemein bekannt, beispielsweise aus dem Artikel "Stand und Entwicklungstendenzen bei der Konstruktion und Anwendung von Getriebemotoren" in der DE-Zeitschrift: VDI-Z, Band 114 (1972) Nr. 2, Seiten 122 - 129, für Antriebseinheiten Getriebe und Motoren zu verwenden, die jeweils zu Getriebe- und Motorreihen eines Baukastensystems gehören. Dabei kann das Getriebe je nach Bedarf aus einem Hauptgetriebe und einem Vorgetriebe bestehen.

Ein derartiges Baukastensystem ermöglicht es, mit relativ wenigen Baueinheiten eine Vielzahl von Antriebseinheiten kostengünstig herzustellen. Das Problem ist dabei, mit wenigen Baueinheiten einen großen Bereich hinsichtlich Drehzahl und Drehmoment abzudecken.

Aus der gattungsgemäßen DE-A-201 94 34 ist weiter bekannt, Einzelgetriebe in gestreckter Anordnung miteinander zu kombinieren. Dies entspricht dem Konstruktionsprinzip, ein Getriebe vor einem zweiten Getriebe anzuordnen, also beide Getriebe in Reihe zu schalten. Dabei besitzen die beiden zusammengeschalteten Getriebe regelmäßig jeweils vollständig abgeschlossene Getriebegehäuse. Eine derartige Zusammenschaltung von separat verwendbaren Einzelgetrieben stellt allerdings eine aufwendige und teure Lösung dar

Aufgabe der Erfindung ist es, eine aus Baueinheiten eines Baukastensystems montierbare Antriebseinheit vorzuschlagen, die kostengünstig ist und mit wenigen Baueinheiten einen großen Drehzahl- und Drehmomentbereich abdeckt, also eine Vielzahl von Kombinationsmöglichkeiten ermöglicht.

Die Lösung dieser Aufgabe ist gekennzeichnet durch die im Patentanspruch 1 angegebenen Merkmale. Durch die kennzeichnenden Merkmale der Unteransprüche 2 bis 7 ist die Antriebseinheit in vorteilhafter Weise weiter ausgestaltet.

Die Lösung sieht vor, daß jede Vorgetriebeeinheit einer gestuften Vorgetriebebaureihe mit der Vorgetriebeeinheit der nächstkleineren und/oder der nächstgrößeren Stufe kombinierbar ist. Die Lösung besteht also darin, die Vorgetriebeeinheiten des Baukastens auch untereinander kombinierbar auszubilden, so daß sie in einer Reihe hintereinander zusammenschaltbar sind und so zusammen mit einer der Hauptgetriebeeinheiten eine Getriebeeinheit mit dem gewünschen Drehzahl- und Drehmomentbereich bilden. Dabei wird vorgeschlagen, daß bei miteinander kombinierten Vorgetriebeeinheiten alle Vorgetriebewellen in einer gemeinsamen Ebene liegend parallel zueinander ausgerichtet sind.

Eine hohe Kombinierbarkeit wird vorzugsweise dadurch sichergestellt, daß jede Vorgetriebeeinheit einstufig ausgebildet ist und eine einzige Vorgetriebewelle aufweist. Letzteres ermöglicht eine einfache konstruktive Ausführung.

Eine einfache Zusammenschaltung der Vorgetriebeeinheiten erreicht man dadurch, daß diese stirnseitig miteinander verbindbar sind.

Die vorgeschlagene Antriebseinheit vereinfacht sich, wenn bei Antriebseinheiten mit mindestens einer Vorgetriebeeinheit die Motorabtriebswelle und die Vorgetriebewellen in der gemeinsamen Ebene liegend parallel zueinander ausgerichtet sind.

Die Verwendung von einer Vielzahl von zusammengeschalteten Vorgetriebeeinheiten ist insbesondere dann ohne Probleme möglich, wenn jede Vorgetriebeeinheit mit einer der gestuften Motoreinheiten zusammenschaltbar ist und wenn das Abtriebsritzel dieser Motoreinheit und das Abtriebsritzel der Vorgetriebeeinheit der nächstkleineren Stufe gleich dimensioniert und im montierten Zustand an derselben Stelle sitzen.

Konstruktiv einfach gestaltet sich die Kombination der Baueinheiten, wenn die miteinander kombinerbaren Gehäuse der Motoreinheiten, der Hauptgetriebeeinheiten und der Vorgetriebeeinheiten korrespondierende stirnseitige Anschlußflächen aufweisen.

Die Montage wird weiter vereinfacht, wenn die miteinander verbundenen Gehäuse der Vorgetriebeeinheiten und der Hauptgetriebeeinheit ein gemeinsames Getriebegehäuse mit einem gemeinsamen Innenraum bilden, der durch die seitliche Befestigung einer Motoreinheit deckelartig verschlossen ist. Bei dieser Ausführung läßt sich auch der Aufwand zur Abdichtung des Getriebegehäuses gering halten.

Ein Ausführungsbeispiel der Erfindung ist in der Zeichnung dargestellt und wird nachfolgend näher beschrieben. Es zeigen:
- Fig. 1: eine Antriebseinheit mit einem zweistufigen Hauptgetriebe sowie zwei Getriebevorstufen,
- Fig. 2: eine schematisierte Darstellung der Getriebevorstufen gemäß Fig. 1 und
- Fig. 3: ein schematisierter Querschnitt der Antriebseinheit gemäß Fig. 1.

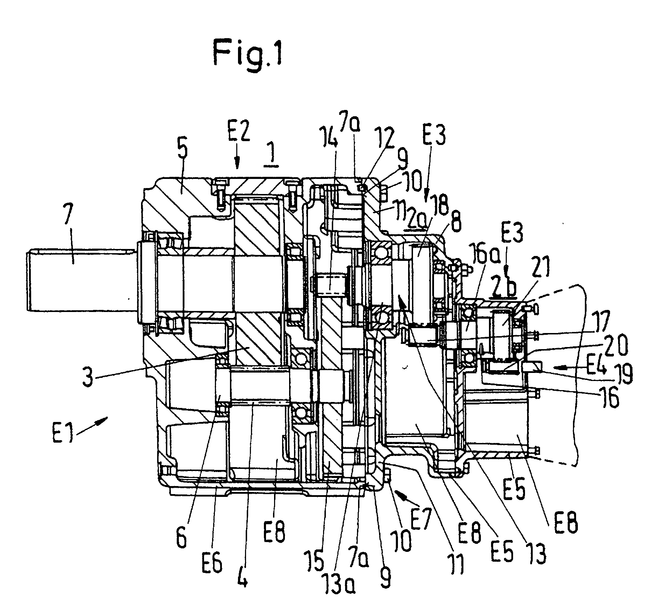

Fig. 1 zeigt eine Antriebseinheit E1 im Querschnitt, die aus leistungsmäßig abgestuften Baueinheiten E2, E3, E4 eines Baukastensystems zusammengesetzt ist, welche insbesondere eine Baureihe von Hauptgetriebeeinheiten E2 mit jeweils mindestens einer zugeordneten Vorgetriebeeinheit E3 sowie dazu anschlußmäßig passende Motoreinheiten E4 einer Motorenbaureihe umfaßt. Hierbei sind die Vorgetriebeeinheiten E3 jeder Stufe mit der Vorgetriebeeinheit E3 der nächstkleineren und/oder der nächstgrößeren Stufe kombinierbar. So ist an jede "mittlere" Vorgetriebeeinheit E3 die nächstgrößere und die nächstkleinere montierbar. Lediglich die größte Vorgetriebeeinheit E3 der Baureihe ist nur mit der nächstkleineren Vorgetriebeeinheit E3 kombinierbar bzw. die kleinste nur mit der nächstgrößeren. Die dicht miteinander verbundenen Gehäuse E5, E6 der Vorgetriebeeinheiten E3 und der Hauptgetriebeeinheit E2 liegen stirnseitig fest aneinander an und bilden ein gemeinsames Getriebegehäuse E7, das einen gemeinsamen Ölraum E8 umschließt. Durch die seitliche Befestigung der Motoreinheit E4 ist das gemeinsame Getriebegehäuse E7 deckelartig verschlossen.

Die Antriebseinheit E1 gemäß Fig. 1 besteht aus einem zweistufigen Hauptgetriebe 1 als Hauptgetriebeeinheit E2 und zwei Getriebevorstufen 2a, 2b als zwei hintereinandergeschaltete Vorgetriebeeinheiten E3.

Das Hauptgetriebe 1 ist intern zweistufig aufgebaut und umfaßt zwei miteinander kämmende Zahnräder 3 und 4, die verschiedene Durchmesser aufweisen. Beide Zahnräder 3, 4 sind in einem Getriebegehäuse 5 auf einer drehgelagerten Antriebswelle 6 bzw. Abtriebswelle 7 drehfest angeordnet. Auf der Seite, die der aus dem Getriebegehäuse 5 herausgeführten Abtriebswelle 7 gegenüberliegt, weist das Getriebegehäuse 5 eine ebene stirnseitige Anschlußfläche 7a auf. Bei der in Fig. 1 dargestellten Ausführung dient diese Anschlußfläche 7a zur schmiermitteldichten Befestigung der mit einem Gehäuse 8 versehenen Getriebevorstufe 2a, wobei das Gehäuse 8 mit einer stirnseitigen Anschlußfläche 9 an der Anschlußfläche 7a flächig anliegt. Die Befestigung der Getriebevorstufe 2a erfolgt mittels Schrauben 10 an den flanschartigen Verbreiterungen 11 des Gehäuses 8. Außerdem sind Zentrierstifte 12 zur exakten Positionierung des Gehäuses 8 vorgesehen. In der einstufig ausgebildeten Getriebevorstufe 2a ist eine einzige Abtriebswelle 13a als Vorgetriebewelle 13 drehgelagert, die sich durch eine Öffnung in das Hauptgetriebe 1 hineinerstreckt. An dem freien Ende der Abtriebswelle 13a ist ein Abtriebsritzel 14 fliegend angeordnet, das mit dem Eingangszahnrad 15 des Hauptgetriebes 1 kämmt.

Für eine weitere Untersetzung der Drehzahlen sorgt die zweite Getriebevorstufe 2b, das ist die nächstkleinere Ausführung der Getriebevorstufenreihe. Diese ist analog zur Befestigung der Getriebevorstufe 2a am Hauptgetriebe 1 an der gegenüberliegenden Seite der Getriebevorstufe 2a befestigt. In der ebenfalls einstufigen Getriebevorstufe 2b ist eine Abtriebswelle 16a als Vorgetriebewelle 16 drehgelagert, die auf ihrem sich in die Getriebevorstufe 2a erstreckenden Ende mit einem fliegend angeordneten Abtriebsritzel 17 versehen ist, das mit dem Eingangszahnrad 18 der Getriebevorstufe 2a kämmt.

An die Getriebevorstufe 2b ist eine Motoreinheit E4 der Motorenbaureihe befestigt, der das Gehäuse 8 und damit das gesamte gemeinsame Getriebegehäuse E7 mit dem gemeinsamen Ölraum E8 deckelartig verschließt. Von der Motoreinheit ist in Fig. 1 nur dessen Abtriebswelle 19 dargestellt. Auch die Abtriebswelle 19 trägt ein Abtriebsritzel 20, das mit dem Eingangszahnrad 21 der nachfolgenden Getriebevorstufe 2b kämmt.

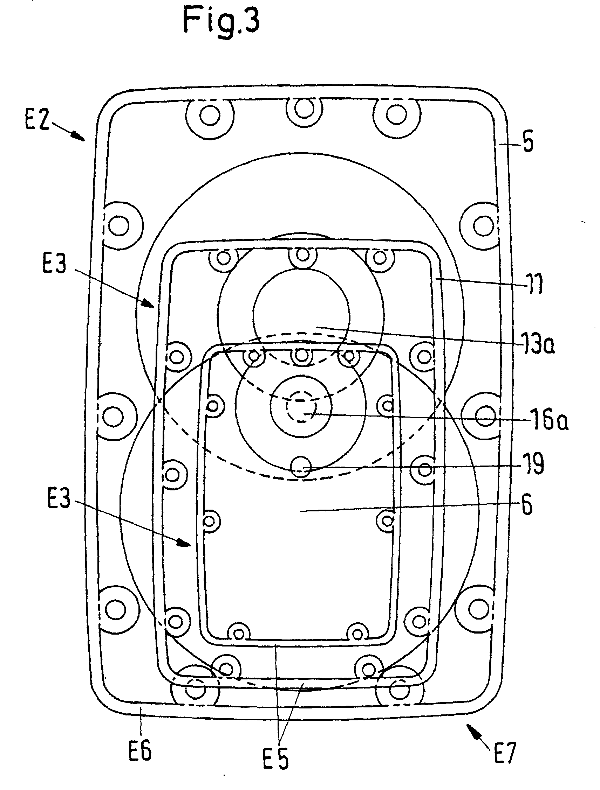

Bereits Fig. 1 läßt erkennen, daß alle Wellen 6, 7, 13a, 16a, 19 parallel zueinander ausgerichtet sind (s. auch Fig. 3). Außerdem ist Fig. 1 entnehmbar, daß die Wellen 13a, 16a, 19 der Getriebevorstufen 2a, 2b sowie der Motoreinheit E4 (Abtriebswelle 19) quer zu ihren Längserstreckungen oder Drehachsen versetzt nach unten und entgegen der Kraftflußrichtung nach hinten angeordnet sind, ähnlich einer Kaskade.

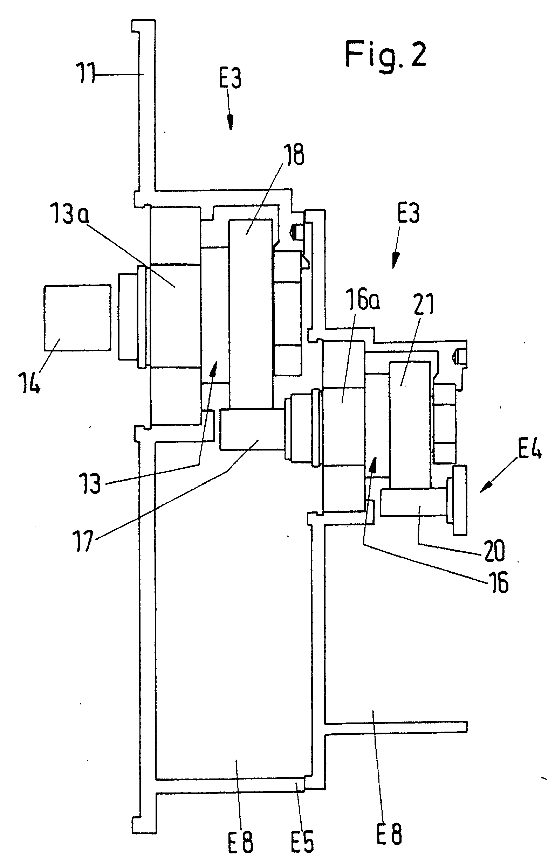

Fig. 2 zeigt die beiden Getriebevorstufen 2a, 2b einschließlich der Abtriebswelle 19 des Motors in einer schematisierten Darstellung.

Die schematisierte Querschnittsdarstellung in Fig. 3 zeigt, daß alle Abtriebswellen 13a, 16a und die Abtriebswelle 19 des Motors in einer gemeinsamen Ebene liegen.

Um nun wahlweise eine Vorgetriebeeinheit E3 oder eine entsprechende Motoreinheit E4 an der Hauptgetriebeeinheit E2 bzw. an jeder Vorgetriebeeinheit E3 zu befestigen, ist das Abtriebsritzel 20 der entsprechenden Motoreinheit E4 gleich dem Abtriebsritzel der wahlweise befestigbaren Vorgetriebeeinheit E3 dimensioniert. Außerdem sitzt das Abtriebsritzel im befestigten Zustand jeweils an derselben Stelle bezüglich der vorgeordneten Baueinheit E2, E3, E4.

### Bezugszeichenliste

- E1: Antriebseinheit
- E2: Hauptgetriebeeinheit
- E3: Vorgetriebeeinheit
- E4: Motoreinheit
- E5: Gehäuse der Vorgetriebeeinheit
- E6: Gehäuse der Hauptgetriebeeinheit
- E7: gemeinsames Getriebegehäuse
- E8: Ölraum
- 1: Hauptgetriebe
- 2a, 2b: Getriebevorstufen
- 3: Zahnrad
- 4: Zahnrad
- 5: Getriebegehäuse
- 6: Antriebswelle
- 7: Abtriebswelle
- 7a: Anschlußfläche
- 8: Gehäuse
- 9: Anschlußfläche
- 10: Schraube
- 11: Verbreiterung
- 12: Zentrierstift
- 13: Vorgetriebewelle
- 13a: Abtriebswelle
- 14: Abtriebsritzel
- 15: Eingangszahnrad
- 16a: Abtriebswelle
- 16: Vorgetriebewelle
- 17: Abtriebsritzel
- 18: Eingangszahnrad
- 19: Abtriebswelle
- 20: Abtriebsritzel
- 21: Eingangszahnrad

## Patentansprüche

1. Antriebseinheit mit einer Getriebeeinheit und einer Motoreinheit (E4), die Baueinheiten eines Baukastensystems sind, welches gestuft ausgebildete Hauptgetriebeeinheiten (E2) mit jeweils zugeordneten Vorgetriebeeinheiten (E3) sowie entsprechend gestuft ausgebildete Motoreinheiten (E4) umfaßt, wobei die Vorgetriebeeinheiten (E3) jeder Stufe mit der Vorgetriebeeinheit (E3) der nächstkleineren und/oder der nächstgrößeren Stufe kombinierbar sind, **dadurch gekennzeichnet, daß** bei miteinander kombinierten Vorgetriebeeinheiten (E3) alle Vorgetriebewellen (13, 16) in einer gemeinsamen Ebene liegend parallel zueinander ausgerichtet sind.

2. Antriebseinheit nach Anspruch 1, **dadurch gekennzeichnet, daß** jede Vorgetriebeeinheit (E3) einstufig ausgebildet ist und eine einzige Vorgetriebewelle (13, 16) aufweist.

3. Antriebseinheit nach Anspruch 1 oder 2, **dadurch gekennzeichnet, daß** die Vorgetriebeeinheiten (E3) stirnseitig miteinander verbindbar sind.

4. Antriebseinheit nach einem der Ansprüche 1 bis 3, **dadurch gekennzeichnet, daß** bei Antriebseinheiten mit mindestens einer Vorgetriebeeinheit (E3) die Motorabtriebswelle (19) und die Vorgetriebewellen (13, 16) in der gemeinsamen Ebene liegend parallel zueinander ausgerichtet sind.

5. Antriebseinheit nach einem der Ansprüche 1 bis 4, **dadurch gekennzeichnet, daß** jede Vorgetriebeeinheit (E3) mit einer der gestuften Motoreinheiten (E4) kombinierbar ist, wobei Abtriebsritzel (20) dieser Motoreinheit (E4) und Abtriebsritzel der Vorgetriebeeinheit (E3) der nächstkleineren Stufe gleich dimensioniert und im montierten Zustand an derselben Stelle sitzen.

6. Antriebseinheit nach einem der Ansprüche 1 bis 5, **dadurch gekennzeichnet, daß** die miteinander kombinerbaren Gehäuse (8) der Motoreinheiten (E4), der Hauptgetriebeeinheiten (E2) und der Vorgetriebeeinheiten (E3) korrespondierende stirnseitige Anschlußflächen (7a, 9) aufweisen.

7. Antriebseinheit nach einem der Ansprüche 1 bis 6, **dadurch gekennzeichnet, daß** die miteinander verbundenen Gehäuse der Vorgetriebeeinheiten (E5) und der Hauptgetriebeeinheit (E6) ein gemeinsames Getriebegehäuse (E7) mit einem gemeinsamen Innenraum bilden, der durch die seitliche Befestigung einer Motoreinheit (E4) deckelartig verschlossen ist.

## Claims

1. Drive unit having a transmission unit and an engine unit (E4), which are modular units of a modular system, which comprises main transmission units (E2) configured in a stepped manner with respectively assigned pre-transmission units (E3) and also engine units (E4) which are correspondingly configured in a stepped manner, the pre-transmission units (E3) of each step being able to be combined with the pre-transmission unit (E3) of the next smaller and/or the next larger step, **characterised in that,** in the case of pre-transmission units (E3) which are combined with each other, all pre-transmission shafts (13, 16) lying in a common plane are aligned parallel to each other.

2. Drive unit according to claim 1, **characterised in that** each pre-transmission unit (E3) is configured in a single stage and has a single pre-transmission shaft (13, 16).

3. Drive unit according to claim 1 or 2, **characterised in that** the pre-transmission units (E3) can be connected to each other on the end side.

4. Drive unit according to one of the claims 1 to 3, **characterised in that,** in the case of drive units with at least one pre-transmission unit (E3), the engine driven shaft (19) and the pre-transmission shafts (13, 16) lying in the common plane are aligned parallel to each other.

5. Drive unit according to one of the claims 1 to 4, **characterised in that** each pre-transmission unit (E3) can be combined with one of the stepped engine units (E4), driven gears (20) of this engine unit (E4) and driven gears of the pre-transmission unit (E3) of the next smaller step being identically dimensioned and situated at the same position in the mounted state.

6. Drive unit according to one of the claims 1 to 5, **characterised in that** the housings (8) of the engine units (E4), of the main transmission units (E2) and of the pre-transmission units (E3), which housings can be combined with each other, have corresponding end side connection faces (7a, 9).

7. Drive unit according to one of the claims 1 to 6, **characterised in that** housings of the pre-transmission units (E5) and of the main transmission unit (E6), which housings are connected to each other, form a common transmission housing (E7) with a common interior, which is closed in a cover-like manner by means of the lateral attachment of an engine unit (E4).

## Revendications

1. Unité d'entraînement avec une unité réductrice et une unité motrice (E4), qui sont des unités d'un système modulaire, comprenant des unités réductrices principales conçues par étages (E2) avec des unités préréductrices correspondantes (E3), ainsi que des unités motrices (E4) conçues par étages de manière correspondante, les unités préréductrices (E3) de chaque étage pouvant être combinées avec l'unité préréductrice (E3) du plus petit et/ou plus grand étage suivant,
**caractérisée en ce que**, dans le cas d'unités préréductrices (E3) combinées entre elles, tous les arbres préréducteurs (13, 16) sont alignés parallèlement les uns aux autres dans un plan commun.

2. Unité d'entraînement selon la revendication 1,
**caractérisée en ce que** chaque unité préréductrice (E3) est conçue à un seul étage et présente un seul arbre préréducteur (13, 16).

3. Unité d'entraînement selon la revendication 1 ou 2,
**caractérisée en ce que** les unités préréductrices (E3) peuvent être reliées ensemble du côté frontal.

4. Unité d'entraînement selon l'une quelconque des revendications 1 à 3,
**caractérisée en ce que**, dans le cas d'unités d'entraînement comprenant au moins une unité préréductrice (E3), l'arbre de sortie moteur (19) et les arbres préréducteurs (13, 16) sont alignés parallèlement les uns aux autres dans le plan commun.

5. Unité d'entraînement selon l'une quelconque des revendications 1 à 4,
**caractérisée en ce que** chaque unité préréductrice (E3) peut être combinée avec une des unités motrices à étages (E4), le pignon de sortie (20) de cette unité motrice (E4) et le pignon de sortie de l'unité préréductrice (E3) du plus petit étage suivant étant dimensionnés de manière identique et situés au même endroit en position montée.

6. Unité d'entraînement selon l'une quelconque des revendications 1 à 5,
**caractérisée en ce que** les carters (8) des unités motrices (E4), des unités réductrices principales (E2) et des unités préréductrices (E3) peuvent être combinés les uns avec les autres et présentent des surfaces de raccordement (7a, 9) frontales correspondantes.

7. Unité d'entraînement selon l'une quelconque des revendications 1 à 6,
**caractérisée en ce que** les carters reliés ensemble des unités préréductrices (E5) et de l'unité réductrice principale (E6) forment un carter de protection des engrenages commun (E7) avec un espace intérieur commun, qui est fermé à la manière d'un couvercle par la fixation latérale d'une unité motrice (E4).
